# EUROPÄISCHE PATENTSCHRIFT

(11) **EP 2 766 742 B1**
(45) Veröffentlichungstag und Bekanntmachung des Hinweises auf die Patenterteilung: **24.05.2017**
(21) Anmeldenummer: 12787637.3
(22) Anmeldetag: 04.10.2012
(51) Int. Cl.: G01S 17/10, G01S 7/484, G01S 7/486, G01S 7/487

(54) **VERFAHREN UND VORRICHTUNG ZUR OPTISCHEN DISTANZMESSUNG ÜBER GROSSE DISTANZBEREICHE**
METHOD AND DEVICE FOR OPTICALLY MEASURING DISTANCES OVER WIDE DISTANCE RANGES
PROCÉDÉ ET DISPOSITIF DE MESURE OPTIQUE DE DISTANCES SUR DE GRANDES ÉTENDUES

(30) Priorität: 13.10.2011 DE 102011054451
(43) Veröffentlichungstag der Anmeldung: 20.08.2014
(73) Patentinhaber: JENOPTIK Advanced Systems GmbH, 22880 Wedel (DE)
(72) Erfinder: JÜNEMANN, Otto, 07751 Bucha (DE); APITZ, Jörg, 07646 Schlöben (DE)
(74) Vertreter: Schaller, Renate
(86) Internationale Anmeldenummer: PCT/DE2012/100312
(87) Internationale Veröffentlichungsnummer: WO 2013/053355

(56) Entgegenhaltungen:
- WO-A1-97/33182
- WO-A1-2008/009387

## Beschreibung

Die Erfindung betrifft ein Verfahren mit dem nach dem Prinzip der Impulslaufzeitmessung die Distanz von Objekten (Zielen) gemessen werden kann und eine hierzu geeignete Vorrichtung, wie sie gattungsgemäß aus der WO 2008/009387 bekannt ist.

Aus dem Stand der Technik sind eine Vielzahl von Distanzmessgeräten (Vorrichtungen zur optischen Distanzmessung) bekannt, die mit einer Impulslaserdiode ausgestattet nach dem Prinzip der Impulslaufzeitmessung arbeiten. Sie werden u. a. in der Militärtechnik, Logistik, industriellen Messtechnik und Sicherheitstechnik angewandt und sind anwendungsbezogen für bestimmte Entfernungsbereiche ausgelegt.

Zur Auswertung eines Empfangssignals, generiert aus einem auf ein Objekt treffenden Sendeimpuls und einem vom Objekt reflektierten Empfangsimpuls, sind verschiedene Auswertemethoden bekannt, wie beispielsweise die Schwellwertmethode und die Abtastmethode.

Bei der Schwellwertmethode wird die elektronische Zeitmessung mit dem Aussenden eines Sendeimpulses gestartet und mit dem Empfang des Empfangsimpulses gestoppt. Der Empfangsimpuls wird detektiert, und damit ein so genanntes Schwellwertsignal generiert, wenn ein die Amplitude eines daraus generierten elektrischen, analogen Empfangssignals einen vorgegebenen Schwellwert überschreitet. Zur komparativen, zeitgenauen Detektion muss die Amplitude des Empfangssignals so hoch sein, dass ein ausreichendes Signal/Rauschverhältnis (SNR) gegeben ist, die Impulsform des Empfangssignals muss eine hohe Flankensteilheit besitzen und der Schwellwert des Komparators muss über den Amplituden von möglichen Rauschspitzen liegen. Nach dem Stop der Zeitmessung ist die Laufzeit bekannt und die Distanz lässt sich in bekannter Weise mit Hilfe der Lichtgeschwindigkeit ermitteln. Bei Sendeimpulsen mit beispielsweise einer Impulsbreite von 5 ns, einer Impulsleistung von 20 W und einer Impulsfrequenz von 1 kHz gilt das Distanzmessgerät als augensicher und eignet sich für Reichweiten bis ca. 100 m (Nahbereich), wobei die Messgenauigkeit bei ca. 5 cm und die Messzeit für eine Einzelimpuls-Laufzeitmessung im Bereich von µs liegt. Um das Empfangssignal ohne Verluste in der Impulsanstiegszeit, Impulsamplitude und Impulsbreite zu verarbeiten, sollte die Empfängerbandbreite dem Frequenzspektrum des Sendeimpulses entsprechen und bei 150 MHz liegen.

Bei der Abtastmethode wird das analoge Empfangssignal abgetastet und aus den digitalisierten Abtastwerten ein Speicherbild erzeugt, welches ein sogenanntes Abtastsignal darstellt. Aus der Anzahl der Abtastungen beginnend mit dem Aussenden des Laserimpulses und endend mit Detektion des Empfangsimpulses sowie der Länge eines Abtastintervalls kann nachträglich die Laufzeit ermittelt und die Distanz errechnet werden. Durch Akkumulation, das heißt wiederholtes zeitsynchrones Abtasten und Aufaddieren zugehöriger Abtastwerte von aufeinander folgenden Empfangssignalen, wird das SNR des akkumulierten Speicherbildes wesentlich verbessert und damit die Reichweite wesentlich erhöht. Die Verbesserung des SNR ist dabei proportional der Wurzel aus der Anzahl der akkumulierten Messungen. Bei Sendeimpulsen mit beispielsweise einer Impulsbreite von 50 ns, einer Impulsleistung von 2W und einer Impulsfrequenz von 1 kHz gilt das Distanzmessgerät als augensicher und eignet sich bei Akkumulation der Empfangssignale für eine Reichweite bis 3000 m (Fernbereich), wobei die Messgenauigkeit bei ca. 0,5 m und die Messzeit bis zum Erreichen eines auswertbaren Signal/Rausch-Verhältnisses bei ca. 1 s liegt. Die Empfängerbandbreite zur formgetreuen Verarbeitung der Sendeimpulse liegt bei 15 MHz.

Mit Laserimpulsen arbeitende Distanzmessgeräte gelten dann als augensicher, wenn die Laserenergie, die das Auge erreicht, die den Emissionszeiten zugeordneten Grenzwerte nicht überschreitet. Das heißt, dass bei einer angenommenen gleichen Anzahl von Sendeimpulsen zweier Impulsfolgen über eine gleiche Zeitdauer für einen gleichen maximalen Betrag der Energie eines einzelnen Sendeimpulses die Augensicherheit noch gegeben ist.

Mit Distanzmessgeräten, bei denen die Signalauswertung mit der Schwellwertmethode erfolgt, wird vorteilhaft ein Sendeimpuls mit einer möglichst kleinen Impulsbreite und einer möglichst hohen Impulsleistung generiert, während mit Distanzmessgeräten, bei denen die Signalauswertung mit der Abtastmethode erfolgt, vorteilhaft ein Sendeimpuls mit einer möglichst langen Impulsbreite, während dieser das analoge Empfangssignal mehrfach abgetastet werden kann, und geringer Impulsleistung generiert wird. Bei vorgegebenen Impulsleistung und Impulsbreite ergibt sich dann unter Beachtung der Kriterien zur Augensicherheit eine maximale Impulsfrequenz.

Sind die Distanzmessgeräte für Anwendungen entweder im Nahbereich oder im Fernbereich vorgesehen, dann erfolgt die Auswertung der durch die Empfangsimpulse generierten Empfangssignale mit der einen oder anderen Methode. Ein vom Distanzmessgerät umfasster Laserimpulsgenerator ist entsprechend so ausgelegt, dass er für die jeweilige Methode vorteilhafte Sendeimpulse generiert, und die Bandbreite des Empfängers für die jeweilige Methode eingestellt ist.

Da es keine gleichermaßen gut geeignete Methode für die Auswertung von Empfangssignalen, die aus Empfangsimpulsen sowohl aus dem Nah- als auch aus dem Fernbereich generiert werden, gibt, ergibt sich die Notwendigkeit verschiedene Messmethoden zur Auswertung des Empfangssignals anzuwenden, wie für den Nahbereich die Schwellwertmethode und den Fernbereich die Abtastmethode.

Z. B. bei Schiffsanlegemanövern in Häfen oder bei einer Gefechtsfeldüberwachung, kann der Distanzbereich von wenigen Metern bis hin zu mehreren tausend Metern reichen. Ein solcher Distanzbereich der den Nahbereich und den Fernbereich wenigstens anteilig umfasst, soll im Sinne der Erfindung als großer Distanzbereich verstanden werden.

Die Problematik verschärft sich, wenn die anzumessenden Objekte sowohl kooperative Ziele als auch nicht-kooperative Ziele sein können, da diese sich in ihrer Reflektivität um Größenordnungen unterscheiden.

Nicht-kooperative Ziele (die Oberfläche des Ziels dient als Reflektor) reflektieren im Vergleich zu kooperativen Zielen (an denen Retroreflektoren angebracht sind) einen um ca. ein 1000-fach geringen Anteil der vom Sendeimpuls auftreffenden Laserenergie. Deshalb liegt für Nicht-kooperative Ziele der Übergang zwischen dem Nah- und Fernbereich bei ca. 100 m Entfernung, während er für kooperative Ziele bei ca. 1000 m Entfernung liegt.

Bei Anwendungen für einen großen Distanzmessbereich arbeitet man in der Praxis häufig mit zwei verschiedenen Distanzmessgeräten, bei denen jeweils eine der beiden Auswertemethoden zur Anwendung kommen.

Aus der WO 2008/009387 A1 sind ein Verfahren zur optoelektronischen Distanzmessung und ein Distanzmessgerät bekannt, bei dem parallel, bevorzugt zeitgleich beide beschriebenen Auswertemethoden zur Anwendung kommen, womit vergleichsweise der Dynamikbereich eines Distanzmessers ausgedehnt wird.

Bei dem hier offenbarten Verfahren wird Laserlicht (nachfolgend Sendeimpuls) in Richtung eines Zielobjektes ausgesendet, das von dem Zielobjekt zurückgestreute Lichtsignal (nachfolgend Empfangsimpuls) detektiert und die Distanz zum Zielobjekt abgeleitet. Zur Ableitung der Distanz werden die Prinzipien der Schwellwertmethode und der Abtastmethode kombiniert, sodass ein Empfangsimpuls, mit einem erweiterten Dynamikbereich des Distanzmessers detektiert und ausgewertet werden kann. Zur Identifikation und zeitlichen Lagebestimmung des Empfangsimpulses erfolgt parallel zur Auswertung eines aus diesem generierten, elektrischen Empfangssignals nach der Schwellwertmethode, eine Auswertung nach der Abtastmethode. Die Dynamikbereiche der Schwellwertmethode - unterer Dynamikbereich - nachfolgend Nahbereich genannt und der Abtastmethode - oberer Dynamikbereich - nachfolgend Fernbereich genannt, überlappen dabei, können aber auch aneinander angrenzen. Damit werden beim Detektieren eines Empfangsimpulses, für ein damit generiertes Empfangssignal für einen unteren und einen oberen Dynamikbereich unterschiedliche Auswerteverfahren verwendet. Im Überlappungsbereich finden beide Auswertemethoden parallel, insbesondere zeitgleich Anwendung, was zu einer Verbesserung der Signalauswertung führen soll.

Ein Distanzmessgerät (Vorrichtung) zur Durchführung dieses Verfahrens umfasst einen Lasersender zum Aussenden von Laserlicht (nachfolgend Sendeimpulse), einen Empfänger zum Detektieren eines von einem Zielobjekt zurückgestreuten Lichtsignals (nachfolgend Empfangsimpulse), eine Signalauswerteeinheit mit denen zeitgleich aus wenigstens einem aus einem Empfangsimpuls generierten Empfangssignal ein Empfangszeitpunkt mit unterschiedlichen Methoden abgeleitet werden kann. Dazu ist die Signalauswerteeinheit so ausgelegt, dass sie aus einem gleichen Empfangssignal den Empfangszeitpunkt über einen ersten Kanal mit der Schwellwertmethode und über einen zweiten Kanal mit der Abtastmethode ableiten und aus diesem auf die Distanz zum Zielobjekt schließen kann.

Die Nachteile des beschriebenen Verfahrens und der Vorrichtung liegen in Folgendem:
- Damit der Sendeimpuls für beide Auswerteverfahren genutzt werden kann, muss ein Kompromiss gemacht werden. Wie erläutert wird bei dem Schwellwertverfahren ein Laserimpuls mit einer hohen Impulsleistung für eine hohe Reichweite, mit einer kleinen Anstiegszeit für eine hohe Messgenauigkeit gebraucht der möglichst kurz ist, damit er trotzdem zur Gewährleistung der Augensicherheit einen nur kleinen Energiegehalt hat. Beim Abtastverfahren wird ein Laserimpuls mit einer möglichst langen Laserdauer gebraucht, um möglichst viele Abtastpunkte für ein formgetreues Speicherabbild zu erhalten. Dabei muss die Impulsleistung gering sein, damit der Impuls bei großer Impulsbreite trotzdem für die Augensicherheit einen nur kleinen Energiegehalt hat. Um einen Empfangsimpuls aus dem Rauschen hervorzuheben, erfolgt die Abtastung von mehreren Empfangssignalen in bekannter Weise akkumulierend.
   Diese Forderungen nach methodenspezifisch optimierten Empfangssignalen sind mit dem/der gemäß der WO 2008/009387 A1 beschriebenen Verfahren und Vorrichtung unvereinbar, da der Sendeimpuls für beide Auswertemethoden ein gleicher formstabiler Laserimpuls mit gleichen Parametern ist. Beide Methoden können daher nicht optimal genutzt werden, was in beiden Fällen zu einer geringeren Messgenauigkeit, geringeren Reichweite und höherer Messzeit führen. Für ein Messgerät, welches augensicher sein soll, ist damit gegenüber Einzelgeräten, die speziell für den Nahbereich ausgelegt sind und mit der Schwellwertmethode arbeiten, der Nahbereich auf eine kürzere Distanz beschränkt, d. h. eine höhere Messgenauigkeit, die mit der Schwellwertmethode im Vergleich zur Abtastmethode erreicht wird, ist auf einen kleineren Nahbereich beschränkt.
- Der Empfänger muss an die kurzen, hohen Sendeimpulse bei Anwendung der Schwellwertmethode bzw. an die langen, niedrigen Sendeimpulse bei Anwendung der Abtastmethode angepasst werden. Das heißt, dass zur formgetreuen Übertragung des analogen Empfangssignals eine elektrische Mindestbandbreite erforderlich ist. Mit der Erhöhung der elektrischen Bandbreite nimmt das elektrische Rauschen zu. Damit verschlechtert sich das Signal/Rausch-Verhältnis des analogen Empfangssignals, was auch zur Reduktion der Messgenauigkeit und Reichweite führt.
- Das Schwellwertverfahren ist ein Echtzeitverfahren, bei dem die Messzeit durch die Laufzeit des Laserimpulses bestimmt wird. Beim Abtastverfahren wird das Speicherabbild eines oder auch mehrerer Empfangssignale zwar in Echtzeit erzeugt, jedoch werden zur Bestimmung der Laufzeit nachträglich die Abtastwerte zur Nachbildung der Form des analogen Empfangssignals herangezogen und mit einer Softwareschwelle verglichen, wodurch sich eine wesentlich längere Messzeit ergibt. Werden beide Auswerteverfahren gleichzeitig angewandt, wird die Messzeit durch die wesentlich längere Auswertezeit des Abtastverfahrens bestimmt.

Aus der WO 97/33182 A1 ist ein elektronisches Distanzmessinstrument bekannt, bei dem die Distanz eines Objektes zuerst mit einem Grobmessverfahren und anschließend mit einem Feinmessverfahren gemessen wird. Die beiden Verfahren liefern einen groben Entfernungswert und einen genaueren Entfernungswert in einem Bereich um den groben Entfernungswert.

Das Messintervall für das Grobmessverfahren ist so gewählt, dass ein ausgesendeter Messpuls nach der Reflexion an einem angemessenen Objekt empfangen wird, bevor der nächste Messpuls ausgesendet wird. Aus der Laufzeit wird grob auf die Entfernung des Objektes geschlossen. Anschließend wird eine Anzahl von Feinmessungen durchgeführt. Da das ungefähre Zeitintervall für die Ankunft des reflektierten Messpulses nach der Grobmessung bekannt ist, kann die Feinmessung mit einer viel geringeren Intensität und einer 100 - bis 100000 - fachen Anzahl von Messpulsen im Vergleich zur Grobmessung durchgeführt werden. Die Auswertung der Empfangssignale der Grobmessung und der Feinmessung kann mit verschiedenen Methoden erfolgen.

Der Erfindung liegt die Aufgabe zu Grunde, ein Verfahren und eine Vorrichtung zu finden, mit dem eine optische Distanzmessung über große Distanzbereiche mit einer höheren Genauigkeit, einer höheren Reichweite und hohem Integrationsgrad möglich ist.

Diese Aufgabe wird durch ein Verfahren zur optischen Distanzmessung über große Distanzbereiche gelöst, bei dem ein Sender Sendeimpulse aussendet, die nach Reflexion an einem Ziel als Empfangsimpulse von einem Empfänger detektiert werden, der daraus elektrische, analoge Empfangssignale generiert, welche über eine Schwellwertmethode in wenigstens ein erstes digitales Empfangssignal, ein Schwellwertsignal darstellend, und über eine Abtastmethode in wenigstens ein zweites digitales Empfangssignal, ein Abtastsignal darstellend, gewandelt werden, und bei dem Empfangszeitpunkte für die Schwellwertsignale und die Abtastsignale abgeleitet werden aus denen die Entfernung des Zieles errechnet wird. Die Sendeimpulse sind erste und zweite Sendeimpulse, die zeitlich nacheinander ausgesendet werden. Dabei werden die ersten Sendeimpulse mit einer höheren Impulsleistung und kürzerer Impulsbreite und die zweiten Sendeimpulse mit einer geringeren Impulsleistung und längeren Impulsbreite ausgesendet. Die ersten Sendeimpulse führen zu den Empfangszeitpunkten der Schwellwertsignale, die über die Auswertung der Empfangssignale, generiert aus Empfangsimpulsen, verursacht von diesen ersten Sendeimpulsen, mit der Schwellwertmethode abgeleitet werden. Die zweiten Sendeimpulse führen zu den Empfangszeitpunkten der Abtastsignale, die über die Auswertung der Empfangssignale, generiert aus Empfangsimpulsen, verursacht von diesen zweiten Sendeimpulsen, mit der Abtastmethode abgeleitet werden.

Um die Mess- und Auswertezeit gering zu halten, werden als erstes die Sendeimpulse für die Auswertung mittels Schwellwertmethode ausgesendet und als zweites die Sendeimpulse für die Auswertung mittels Abtastmethode nur dann ausgesendet, wenn mit der Auswertung mittels Schwellwertmethode kein Empfangszeitpunkt abgeleitet werden kann.
Alternativ werden als erstes die zweiten Sendeimpulse für die Auswertung mittels Abtastmethode ausgesendet und als zweites die ersten Sendeimpulse für die Auswertung mittels Schwellwertmethode dann ausgesendet, wenn die mit der Auswertung mittels Abtastmethode ermittelte Distanz, unter Verwendung eines ersten Sendeimpulses, bei dem die Augensicherheit des Gerätes gegeben ist, mit der Schwellwertmethode ermittelt werden kann.

Um eine hohe Reichweite und Messgenauigkeit zu erreichen, werden vorteilhaft die Impulsenergien für die ersten und zweiten Sendeimpulse bei Augensicherheit maximiert.

Die Aufgabe wird durch eine Vorrichtung zur optischen Distanzmessung über große Distanzbereiche und konfiguriert zur Durchführung eines oben genannten Verfahrens, mit einem Sender zum Aussenden von optischen Sendeimpulsen, einem Empfänger mit einer Empfängeroptik, einer Fotodiode, einem Verstärker zum Detektieren eines Empfangsimpulses, der einen an einem Ziel reflektieren Anteils des Sendeimpulses entspricht, und Generieren eines elektrischen, analogen Empfangssignals und Mitteln zum Wandeln des analogen Empfangssignals in ein digitales Empfangssignal, sowie einer Rechen- und Speichereinheit, dadurch gelöst, dass die Mittel zum Wandeln des analogen Empfangssignals in ein digitales Empfangssignal durch einen ADC gebildet werden, der dazu ausgelegt ist, dass er mittels eines Steuersignals einer ADC-Steuerung so umgestellt werden kann, dass er das vom Verstärker kommende analoge Empfangssignal, entweder auf Abtastbetrieb geschaltet, durch Abtasten mit einem vorgegebenen Abtastintervall in ein digitales Abtastsignal wandelt oder, auf Komparatorbetrieb geschaltet, mit dem Durchlaufen des analogen Empfangssignals durch einen Schwellwert in ein digitales Schwellwertsignal wandelt.

Vorteilhaft wird der Sender von einer Laseroptik, einer Impulslaserdiode und einem Laserimpulsgenerator gebildet, der mit einer Impulssteuerung verbunden ist, die so ausgelegt ist, dass wenigstens ein erster Sendeimpuls mit einer vergleichsweise höheren Impulsleistung und kürzerer Impulsbreite ausgesendet wird, wenn der ADC auf Komparatorbetrieb geschaltet ist und wenigstens ein zweiter Sendeimpuls mit einer vergleichsweise geringeren Impulsleistung und längeren Impulsbreite ausgesendet wird, wenn der ADC auf Abtastbetrieb geschaltet ist.

Es ist von Vorteil, wenn der Verstärker so ausgelegt ist, dass seine elektrische Bandbreite über eine Verstärkersteuerung an das Frequenzspektrum der Sendeimpulse angepasst ist.

Die Erfindung soll nachfolgend mittels einer Zeichnung anhand von Ausführungsbeispielen näher erläutert werden. Hierzu zeigt:

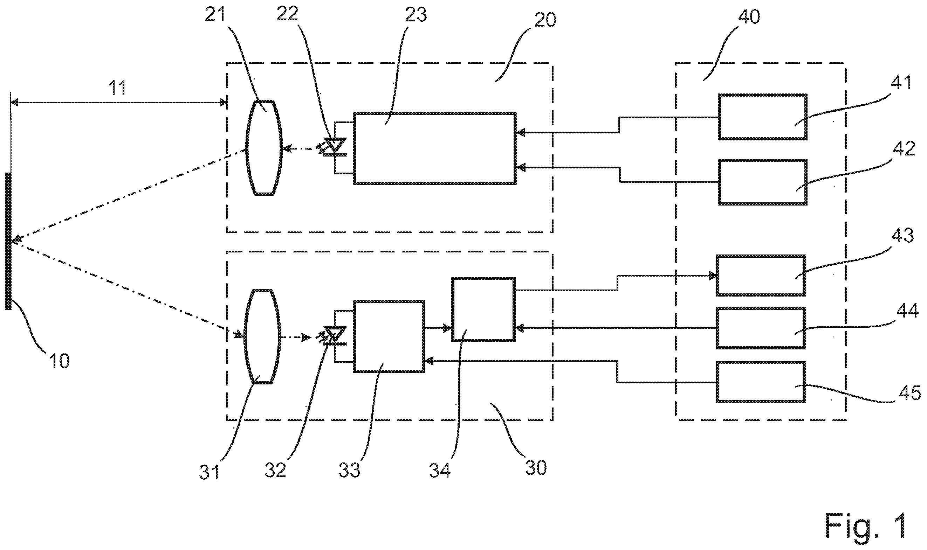

Fig. 1 ein Blockschaltbild einer Vorrichtung zur Distanzmessung (Distanzmessgerät).

Ein erfindungsgemäßes Verfahren und eine erfindungsgemäße Vorrichtung sollen nachfolgend für ein erstes Ausführungsbeispiels anhand eines Blockschaltbildes eines Distanzmessgerätes näher erläutert werden.

Gleich auch allen gattungsgemäßen Verfahren wird ein von einem Sender 20 auf ein Ziel 10 gerichteter Sendeimpuls vom Ziel 10 reflektiert und ein auf einem Empfänger 30 auftreffende, distanzabhängig geschwächte Anteil des Sendeimpulses wird als Empfangsimpuls detektiert, aus dem mittelbar über die Empfangszeitpunkte generierter Empfangssignale die Distanz 11 des Ziels 10 abgeleitet wird.

In einem ersten Ausführungsbeispiel für das Verfahren soll die Distanz 11 zu einem nichtkooperativen Ziel 10 ermittelt werden, im dem zuerst die Distanz 11 über die Abtastmethode und unter bestimmten Vorraussetzungen anschließend über die Schwellwertmethode bestimmt wird. Ein Distanzmessgerät wird im Rahmen dieser Beschreibung ebenfalls offenbart.

Der Sender 20 umfasst einen Laserimpulsgenerator 23 eine damit verbundene Impulslaserdiode 22 und eine in Abstrahlrichtung vorgeordnete Laseroptik 21.

Der Empfänger 30 umfasst eine Empfängeroptik 31, eine in Einstrahlrichtung nachgeordnete Fotodiode 32 und einen damit verbundenen Verstärker 33. Der Verstärkerausgang ist mit einem ADC 34 verbunden, dessen Eingang mit einer ADC-Steuerung 44 in Verbindung steht und dessen Ausgang mit einer Rechen- und Speichereinheit 43 verbunden ist. Ein Eingang des Verstärkers 33 ist mit einer Verstärkersteuerung 45 verbunden.

Neben der Verstärkersteuerung 45, der ADC-Steuerung 44 und der Rechen- und Speichereinheit 43 sind eine Impulssteuerung 42 und ein Lasertrigger 41, die mit Eingängen des Laserimpulsgenerator 23 verbunden sind, in einem Controller 40 vorhanden.

Zur Durchführung des Verfahrens wird der Laserimpulsgenerator 23 des Senders 20 von einem Impulssteuerungssignal initialisiert, welches in der Impulssteuerung 42 des Controllers 40 generiert wird. Folglich gibt die Impulslaserdiode 22 über die Laseroptik 21 einen Laserstrahl ab, der aus einer Folge von Laserimpulsen beispielsweise mit einer Impulsbreite von 50 ns, einer Impulsleistung von 2W, einer Impulsfrequenz von 1 kHz besteht. Mit jedem Auslösen des Lasertriggers 41 wird zeitgleich ein Laserimpuls abgegeben.

Der Verstärker 33 wird mittels der Verstärkersteuerung 45 ebenfalls initialisiert, sodass ein über die Empfängeroptik 31 von der Fotodiode 32 aufgenommener Empfangsimpuls mit einem bestmöglichen Signal/Rausch-Verhältnis (SNR) empfangen wird, indem die Bandbreite des Verstärkers 33 an das Frequenzspektrum der Sendeimpulse angepasst wird, was im Beispielsfall z. B. 15 MHz ist.

Außerdem wird mittels eines Steuersignals der ADC-Steuerung 44 der ADC 34 so eingestellt, dass dieser das vom Verstärker 33 kommende analoge Empfangssignal im Abtastbetrieb mit einem Abtastintervall von im Beispielsfall 10 ns abtastet und in ein digitales Empfangssignal (nachfolgend Abtastsignal) mit einer Amplitudenauflösung von 8 Bit wandelt. Der Zeitpunkt des Auslösens des Lasertriggers 41 und die aufeinanderfolgenden Abtastwerte innerhalb eines Abtastsignals werden in der Rechen- und Speichereinheit 43 abgelegt und so ein digitales Abbild des analogen Empfangssignals erzeugt. Durch eine wiederholt zeitsynchrone Addition von Abtastsignalen kann das SNR des akkumulierten Abtastsignals gegenüber dem SNR nur eines Abtastsignals mit dem Faktor aus der Wurzel der Anzahl der akkumulierten Abtastsignale verbessert werden.

Jeweils nach einer vorgegebenen Anzahl von Akkumulationen wird das akkumulierte Abtastsignal untersucht und die Akkumulation bei Vorhandensein eines hinreichenden SNR abgeschlossen. Die Abtastsignale werden in der Rechen- und Speichereinheit 43 gespeichert und es wird das Messergebnis als Distanzwert und das SNR eines einzelnen Empfangssignals berechnet.

In Abhängigkeit vom erreichten SNR und der Anzahl der akkumulierten Abtastsignale kann abgeleitet werden mit welcher Impulsleistung bei gegebener Entfernung ein Sendeimpuls ausgesendet werden müsste, um mit dem daraus entstehenden Empfangsimpuls ein analoges Empfangssignal zu generieren aus dem zusätzlich die Distanz 11 noch einmal mit der Schellwertmethode ermittelt werden kann.
Ist bei einem sich so ergebenden Sendeimpuls die Augensicherheit für das Distanzmessgerät gegeben, wird die Distanz 11 noch einmal mittels der Schwellwertmethode ermittelt, was zu einer höheren Genauigkeit des Messergebnisses führt. Dazu wird der Laserimpulsgenerator 23 mittels eines Impulssteuerungssignals von der Impulsteuerung 42 so initialisiert, dass die Impulslaserdiode 22 über die Laseroptik 21 einen Laserstrahl abgibt, der einen einzelnen Laserimpuls oder eine Folge von Laserimpulsen mit beispielsweise einer Impulsbreite von 5 ns, einer Impulsleistung von 20 W und einer Impulsfrequenz von 1 kHz enthält. Mit jedem Auslösen des Lasertriggers 41 wird zeitgleich ein Laserimpuls abgegeben. Grundsätzlich kann die Distanz 11 anhand nur eines ausgesendeten Laserimpulses ermittelt werden. Durch das Auswerten mehrerer analoger Empfangssignale kann das Messergebnis verifiziert, gemittelt und genauer dargestellt werden. Für eine einfachere Beschreibung soll nachfolgend davon ausgegangen werden, dass eine Folge von Laserimpulsen mit einer vorgegebenen Impulsfrequenz ausgesendet wird.

Über die Empfängeroptik 31 empfängt die Fotodiode 32 den Empfangsimpuls. Zur Verstärkung mit einem optimalen SNR wird entsprechend dem Frequenzspektrum der jetzt wesentlich kürzeren Sendeimpulse die elektrische Bandbreite des Verstärkers 33 über die Verstärkersteuerung 45 erhöht, im Beispielsfall auf 150 MHz. Mittels der ADC-Steuerung 44 wird der ADC 34 auf Komparatorbetrieb umgestellt, und der bei der Abtastmethode mit/ohne Akkumulation erforderliche Abtasttakt abgeschaltet, sodass der ADC 34 einen Komparator darstellt, der mit dem Durchlaufen des Empfangssignals durch den Schwellwert ein einzelnes digitales Empfangssignal (Schwellwertsignal) generiert. Die Zeitdifferenz zwischen dem Auslösen des Lasertriggers 41 und der Anstiegsflanke des Schwellwertsignals wird mittels einer elektronischen Zeitmessung mit einer Zeitauslösung von beispielsweise 667 ps (Distanzauflösung 1 cm) gemessen und daraus die Distanz 11 bestimmt.

Auch können nach der Durchführung der Abtastmethode mit der Auswertung des Inhaltes der Rechen- und Speichereinheit 43 weitere Informationen über die Messstrecke (beispielsweise Regen, Nebel, Schnellfall) abgeleitet werden, die zur Parametrisierung des Sendeimpulses für die Schwellwertmethode genutzt werden können. So kann zum Beispiel zur Diskriminierung von so genannten Softtargets, wie Nebelschwaden, die Empfindlichkeit des Empfängers 30 in Echtzeit verändert werden.

Ist das mittels der Abtastmethode mit Akkumulation erreichte SNR für die Anwendung der Schwellwertmethode nicht geeignet, das heißt das analoge Empfangssignal liegt weit im Rauschen und würde zur Detektion einen Sendeimpuls voraussetzen, der keine Augensicherheit mehr gewährleistet, dann kann die Distanz 11 nur über die Abtastmethode ermittelt werden.

In einem zweiten Ausführungsbeispiel soll die Distanz 11 zu einem nichtkooperativen Ziel 10 ermittelt werden, im dem zuerst die Distanz 11 über die Schwellwertmethode und unter bestimmten Vorraussetzungen anschließend über die Abtastmethode bestimmt wird. Die Ermittlung der Distanz 11 über die eine oder andere Methode erfolgt wie im ersten Ausführungsbeispiel beschrieben. Der Vorteil des Verfahrens gemäß dem zweiten Ausführungsbeispiel, liegt darin, dass wenn mit der Schwellwertmethode eine Distanz 11 gemessen werden kann, dass Messverfahren schneller abläuft. Erst wenn mittels der Schwellwertmethode keine Distanz 11 ermittelt werden kann, wird die Abtastmethode angewandt. Es versteht sich, dass die Anwendung der einen oder anderen Methode die Parametrisierung des Sendeimpulses und die Adaption des Distanzmessgerätes wie beschrieben umfasst. Während die Adaption des Distanzmessgerätes aus der Beschreibung der Ausführungsbeispiele hervorgeht, können Hinweise zur Parametrisierung des Sendeimpulses auch aus der Einleitung der Beschreibung entnommen werden, wo für die beiden Methoden die Aufbereitung jeweils optimaler Sendeimpulse beschrieben wurde.

Dem Fachmann auf dem Gebiet dieser Erfindung erschließt sich, dass die Erfindung nicht auf die Einzelheiten der vorstehend beispielhaft angeführten Ausführungsformen beschränkt ist, sondern dass die vorliegende Erfindung in anderen speziellen Formen verkörpert sein kann, ohne vom Umfang der Erfindung abzuweichen, die durch die anliegenden Patentansprüche festgelegt ist.

Es ist für ein erfindungsgemäßes Distanzmessgerät von wesentlichem Vorteil, dass mit ihm nacheinander eine Distanz 11 mit der Schwellwertmethode und der Abtastmethode ermittelt werden kann, wobei der Laserimpulsgenerator 23 so angesteuert werden kann, dass er sowohl für die eine Methode als auch für die andere Methode jeweils optimale Sendeimpulse bzw. optimale Folgen von Sendeimpulsen generieren kann, der Verstärker 33 mit seiner Bandbreite an das Frequenzspektrum des jeweiligen Laserimpulses angepasst wird und der ADC 34 so ausgelegt ist, dass der ein analoges Empfangssignal in ein digitales Empfangssignal wandelt, welches wahlweise ein Schwellwertsignal oder ein Abtastsignal darstellt.

### Bezugszeichenliste

- 10: Ziel
- 11: Distanz
- 20: Sender
- 21: Laseroptik
- 22: Impulslaserdiode
- 23: Laserimpulsgenerator

- 30: Empfänger
- 31: Empfängeroptik
- 32: Fotodiode
- 33: Verstärker
- 34: ADC = Analog/Digital-Converter

- 40: Controller
- 41: Lasertrigger
- 42: Impulssteuerung
- 43: Rechen- und Speichereinheit
- 44: ADC-Steuerung
- 45: Verstärkersteuerung

## Patentansprüche

1. Verfahren zur optischen Distanzmessung über große Distanzbereiche, bei dem ein Sender (20) Sendeimpulse aussendet, die nach Reflexion an einem Ziel (10) als Empfangsimpulse von einem Empfänger (30) detektiert werden, der daraus elektrische, analoge Empfangssignale generiert, welche über eine Schwellwertmethode in wenigstens ein erstes digitales Empfangssignal, ein Schwellwertsignal darstellend, und über eine Abtastmethode in wenigstens ein zweites digitales Empfangssignal, ein Abtastsignal darstellend, gewandelt werden, und bei dem Empfangszeitpunkte für die Schwellwertsignale und die Abtastsignale abgeleitet werden, aus denen die Entfernung des Ziels (10) errechnet wird, **dadurch gekennzeichnet,**
**dass** die Sendeimpulse erste und zweite Sendeimpulse sind, die zeitlich nacheinander ausgesendet werden, wobei die ersten Sendeimpulse mit einer höheren Impulsleistung und kürzeren Impulsbreite ausgesendet werden und aus denen die Empfangszeitpunkte für die Schwellwertsignale abgeleitet werden und die zweiten Sendeimpulse mit geringerer Impulsleistung und längerer Impulsbreite ausgesendet werden und aus denen die Empfangszeitpunkte für die Abtastsignale abgeleitet werden, wobei als erstes die ersten Sendeimpulse für die Auswertung mittels Schwellwertmethode ausgesendet werden und als zweites die zweiten Sendeimpulse für die Auswertung mittels Abtastmethode nur dann ausgesendet werden, wenn mit der Auswertung mittels Schwellwertmethode kein Empfangszeitpunkt abgeleitet werden kann, um die Mess- und Auswertezeit gering zu halten.

2. Verfahren zur optischen Distanzmessung über große Distanzbereiche, bei dem ein Sender (20) Sendeimpulse aussendet, die nach Reflexion an einem Ziel (10) als Empfangsimpulse von einem Empfänger (30) detektiert werden, der daraus elektrische, analoge Empfangssignale generiert, welche über eine Schwellwertmethode in wenigstens ein erstes digitales Empfangssignal, ein Schwellwertsignal darstellend, und über eine Abtastmethode in wenigstens ein zweites digitales Empfangssignal, ein Abtastsignal darstellend, gewandelt werden, und bei dem Empfangszeitpunkte für die Schwellwertsignale und die Abtastsignale abgeleitet werden, aus denen die Entfernung des Ziels (10) errechnet wird, **dadurch gekennzeichnet, dass** die Sendeimpulse erste und zweite Sendeimpulse sind, die zeitlich nacheinander ausgesendet werden, wobei die ersten Sendeimpulse mit einer höheren Impulsleistung und kürzeren Impulsbreite ausgesendet werden und aus denen die Empfangszeitpunkte für die Schwellwertsignale abgeleitet werden und die zweiten Sendeimpulse mit geringerer Impulsleistung und längerer Impulsbreite ausgesendet werden und aus denen die Empfangszeitpunkte für die Abtastsignale abgeleitet werden, wobei als erstes die zweiten Sendeimpulse für die Auswertung mittels Abtastmethode ausgesendet werden und als zweites die ersten Sendeimpulse für die Auswertung mittels Schwellmethode nur dann ausgesendet werden, wenn die mit der Auswertung mittels Abtastmethode ermittelte Distanz, unter Verwendung eines ersten Sendeimpulses, bei dem die Augensicherheit des Gerätes gegeben ist, mit der Schwellwertmethode ermittelt werden kann.

3. Verfahren nach Anspruch 1 oder 2, **dadurch gekennzeichnet,**
**dass** die Impulsenergien für die ersten und zweiten Sendeimpulse bei Augensicherheit maximiert werden, um bei Anwendung der Schwellwertmethode und Abtastmethode jeweils eine hohe Reichweite und Messgenauigkeit zu erreichen.

4. Vorrichtung zur optischen Distanzmessung über große Distanzbereiche und konfiguriert zur Durchführung eines Verfahrens nach Anspruch 1 oder 2, mit einem Sender (20), einem Empfänger (30) mit einer Empfängeroptik (31), einer Fotodiode (32), einem Verstärker (33) zum Detektieren eines Empfangsimpulses, der einem an einem Ziel (10) reflektierten Anteil des Sendeimpulses entspricht, und Generieren eines elektrischen, analogen Empfangssignals und Mitteln zum Wandeln des analogen Empfangssignals in ein digitales Empfangssignal, sowie einer Rechen- und Speichereinheit (43), wobei der Sender (20) dazu ausgelegt ist, zeitlich nacheinander erste und zweite Sendeimpulse auszusenden, wobei die ersten Sendeimpulse eine vergleichsweise höhere Impulsleistung und kürzere Impulsbreite aufweisen und die zweiten Sendeimpulse eine vergleichsweise geringere Impulsleistung und längere Impulsbreite aufweisen, und wobei die Mittel zum Wandeln des analogen Empfangssignals in ein digitales Empfangssignal durch einen ADC (34) gebildet werden, der dazu ausgelegt ist, dass er mittels eines Steuersignals einer ADC-Steuerung (44) so umgestellt werden kann, dass er das vom Verstärker (33) kommende analoge Empfangssignal entweder auf Abtastbetrieb geschaltet, durch Abtasten mit einem vorgegebenen Abtastintervall in ein digitales Abtastsignal wandelt oder auf Komparatorbetrieb geschaltet, mit dem Durchlaufen des analogen Empfangssignals durch einen Schwellwert in ein digitales Schwellwertsignal wandelt.

5. Vorrichtung nach Anspruch 4, **dadurch gekennzeichnet,**
**dass** der Sender (20) von einer Laseroptik (21), einer Impulslaserdiode (22) und einem Laserimpulsgenerator (23) gebildet wird, der mit einer Impulssteuerung (42) verbunden ist, die so ausgelegt ist, dass wenigstens einer der ersten Sendeimpulse mit der vergleichsweise höheren Impulsleistung und kürzerer Impulsbreite ausgesendet wird, wenn der ADC (34) auf Komparatorbetrieb geschaltet ist und wenigstens einer der zweiten Sendeimpulse mit der vergleichsweise geringeren Impulsleistung und längeren Impulsbreite ausgesendet wird, wenn der ADC (34) auf Abtastbetrieb geschaltet ist.

6. Vorrichtung nach Anspruch 5, **dadurch gekennzeichnet,**
**dass** der Verstärker (33) so ausgelegt ist, dass seine elektrische Bandbreite über die Verstärkersteuerung (45) an das Frequenzspektrum der Sendeimpulse angepasst wird.

## Claims

1. A method for optically measuring distances over wide distance ranges, wherein a transmitter (20) emits transmission pulses which, after reflection from a target (10), are detected as reception pulses by a receiver (30) which generates electric, analog reception signals therefrom, which are converted into at least one first digital reception signal, constituting a threshold signal, via a threshold method, and into at least one second digital reception signal, constituting a sampling signal, via a sampling method, and wherein reception times are derived for the threshold signals and the sampling signals are derived and used to calculate the distance of the target (10),
**characterized in that**
the transmission pulses are first and second transmission pulses, which are emitted in succession, wherein the first transmission pulses are emitted with a higher pulse power and a shorter pulse width and are used to derive the reception times for the threshold signals, and the second transmission pulses are emitted with a lower pulse power and a longer pulse width and are used to derive the reception times for the sampling signals, wherein in order to keep the measurement and evaluation time short, the first transmission pulses are emitted first for evaluation by means of the threshold method and the second transmission pulses are emitted second for evaluation by means of the sampling method, but only if no reception time can be derived from the evaluation by means of the threshold method.

2. A method for optically measuring distances over wide distance ranges, wherein a transmitter (20) emits transmission pulses which, after reflection from a target (10), are detected as reception pulses by a receiver (30) which generates electric, analog reception signals therefrom, which are converted into at least one first digital reception signal, constituting a threshold signal, via a threshold method, and into at least one second digital reception signal, constituting a sampling signal, via a sampling method, and wherein reception times are derived for the threshold signals and the sampling signals and used to calculate the distance of the target (10),
**characterized in that**
the transmission pulses are first and second transmission pulses, which are emitted in succession, wherein the first transmission pulses are emitted with a higher pulse power and a shorter pulse width and are used to derive the reception times for the threshold signals, and the second transmission pulses are emitted with a lower pulse power and a longer pulse width and are used to derive the reception times for the sampling signals, wherein the second transmission pulses are emitted first for evaluation by means of the sampling method and the first transmission pulses are emitted second for evaluation by means of the threshold method, but only if the distance determined using the evaluation by means of the sampling method can be determined by means of the threshold method using a first transmission pulse for which eye protection of the device is ensured.

3. The method according to claim 1 or 2, **characterised in that** the pulse energies for the first and second transmission pulses are maximized, if eye protection is ensured, in order to achieve a long range and high measurement accuracy when applying the threshold method and the sampling method, respectively.

4. A device for optically measuring distances over wide distance ranges, which is configured to carry out a method according to claim 1 or 2, said device comprising a transmitter (20), a receiver (30) comprising a reception optics system (31), a photodiode (32), an amplifier (33) for detecting a reception pulse which corresponds to a portion of the transmission pulse reflected by a target (10), and generating an electric, analog reception signal, and means for converting the analog reception signal into a digital reception signal, as well as a computer and memory unit (43), wherein the transmitter (20) is configured to emit first and second transmission pulses in succession, said first transmission pulses having a comparatively higher pulse power and shorter pulse width and said second transmission pulses having a comparatively lower pulse power and longer pulse width, and wherein the means for converting the analog reception signal into a digital reception signal are formed by an ADC (34) which is configured such that it can be switched by means of a control signal from an ADC control unit (44) such that it either converts the analog reception signal coming from the amplifier (33) into a digital sampling signal by sampling at a predetermined sampling interval, when switched to sampling operation, or converts the signal into a digital threshold signal by passing the analog reception signal through a threshold value, when switched to comparator operation.

5. The device according to claim 4, **characterised in that** the transmitter (20) is formed by a laser optics system (21), a pulse laser diode (22) and a laser pulse generator (23), which is connected with a pulse control unit (42) configured such that at least one of the first transmission pulses is emitted with the comparatively higher pulse power and shorter pulse width, when the ADC (34) is switched to comparator operation and at least one of the second transmission pulses is emitted with the comparatively lower pulse power and longer pulse width, when the ADC (34) is switched to sampling operation.

6. The device according to claim 5, **characterised in that** the amplifier (33) is configured such that its electrical bandwidth is adapted to the frequency spectrum of the transmission pulses by the amplifier control unit (45).

## Revendications

1. Procédé de mesure optique de distance sur de grandes étendues, dans lequel procédé un émetteur (20) émet des impulsions d'émission qui, ayant été réfléchies par une cible (10), sont détectées en tant qu'impulsions de réception par un récepteur (30), qui en génère des signaux de réception électriques, analogues qui sont convertis en au moins un premier signal de réception digital, représentant un signal de seuil, par une méthode à seuils et en au moins un deuxième signal de réception digital, représentant un signal d'échantillonnage, par une méthode d'échantillonnage, et dans lequel des temps de réception sont dérivés pour les signaux de seuil et les signaux d'échantillonnage, lesdits temps étant utilisés pour calculer la distance de la cible (10),
**caractérisé en ce que**
les impulsions d'émission sont des premières et des deuxièmes impulsions d'émission, qui sont émises successivement, lesdites premières impulsions d'émission étant émises avec une puissance d'impulsion supérieure et une largeur d'impulsion inférieure et étant utilisées pour dériver les temps de réception pour les signaux de seuil, et lesdites deuxièmes impulsions d'émission étant émises avec une puissance d'impulsion inférieure et une largeur d'impulsion supérieure et étant utilisées pour dériver les temps de réception pour les signaux d'échantillonnage, lesdites premières impulsions d'émission pour l'évaluation au moyen de la méthode à seuils étant émises en premier lieu et les deuxièmes impulsions d'émission pour l'évaluation au moyen de la méthode d'échantillonnage étant émises en second lieu, mais seulement s'il n'est pas possible de dériver un temps de réception par l'évaluation au moyen de la méthode à seuils, minimisant ainsi le temps de mesure et d'évaluation.

2. Procédé de mesure optique de distance sur de grandes étendues, dans lequel procédé un émetteur (20) émet des impulsions d'émission qui, ayant été réfléchies par une cible (10), sont détectées en tant qu'impulsions de réception par un récepteur (30), qui en génère des signaux de réception électriques, analogues qui sont convertis en au moins un premier signal de réception digital, représentant un signal de seuil, par une méthode à seuils et en au moins un deuxième signal de réception digital, représentant un signal d'échantillonnage, par une méthode d'échantillonnage, et dans lequel des temps de réception sont dérivés pour les signaux de seuil et les signaux d'échantillonnage, lesdits temps étant utilisés pour calculer la distance de la cible (10),
**caractérisé en ce que**
les impulsions d'émission sont des premières et des deuxièmes impulsions d'émission, qui sont émises successivement, lesdites premières impulsions d'émission étant émises avec une puissance d'impulsion supérieure et une largeur d'impulsion inférieure et étant utilisées pour dériver les temps de réception pour les signaux de seuil, et lesdites deuxièmes impulsions d'émission étant émises avec une puissance d'impulsion inférieure et une largeur d'impulsion supérieure et étant utilisées pour dériver les temps de réception pour les signaux d'échantillonnage, lesdites deuxièmes impulsions d'émission pour l'évaluation au moyen de la méthode d'échantillonnage étant émises en premier lieu et lesdites premières impulsions d'émission pour l'évaluation au moyen de la méthode à seuils étant émises en second lieu, mais seulement si la distance déterminée par l'évaluation au moyen de la méthode d'échantillonnage peut être déterminée par la méthode d'échantillonnage en utilisant une première impulsion d'émission pour laquelle la protection des yeux est assurée pour le dispositif.

3. Procédé selon la revendication 1 ou 2, **caractérisé en ce que** les énergies d'impulsion pour les premières et deuxièmes impulsions d'émission sont maximalisées lorsque la protection des yeux est assurée, afin d'obtenir respectivement une grande portée et une haute précision de mesure lors de l'application de la méthode à seuils et de la méthode d'échantillonnage.

4. Dispositif de mesure optique de distance sur de grandes étendues, ledit dispositif étant configuré pour réaliser un procédé selon la revendication 1 ou 2 et comportant un émetteur (20),
un récepteur (30) comportant une optique de réception (31), une photodiode (32), un amplificateur (33) pour détecter une impulsion de réception qui correspond à une partie de l'impulsion d'émission réfléchie par une cible (10), et pour générer un signal de réception électrique, analogue, et des moyens de conversion du signal de réception analogue en un signal de réception digital, ainsi qu'une unité de calcul et de mémoire (43), l'émetteur (20) étant réalisé pour émetrre successivement des premières et deuxièmes impulsions d'émission, lesdites premières impulsions d'émission présentant une puissance d'impulsion relativement supérieure et une largeur d'impulsion relativement inférieure et lesdites deuxièmes impulsions d'émission présentant une puissance d'impulsion relativement inférieure et une largeur d'impulsion relativement supérieure, et les moyens de conversion du signal de réception analogue en un signal de réception digital étant réalisés par un CAN (34) qui est réalisé de manière à pouvoir être commuté au moyen d'un signal de commande de la commande CAN (44) pour convertir le signal de réception analogue en provenance de l'amplificateur (33) ou bien en un signal d'échantillonnage digital par échantillonnage avec une intervalle d'échantillonnage définie, lorsqu'il se trouve en opération d'échantillonnage, ou bien en un signal de seuil digital en passant le signal de réception analogue par un seuil, lorsqu'il se trouve en opération de comparateur.

5. Dispositif selon la revendication 4, **caractérisé en ce que** l'émetteur (20) est constitué par une optique laser (21), une diode laser à impulsions (22) et un générateur d'impulsions laser (23), qui est relié à une commande d'impulsions (42) réalisée de sorte qu'au moins l'une des premières impulsions d'émission de puissance d'impulsion relativement supérieure et de largeur d'impulsion relativement inférieure soit émise lorsque le CAN (34) est commuté vers l'opération de comparateur et au moins l'une des deuxièmes impulsions d'émission de puissance d'impulsion relativement inférieure et de largeur d'impulsion relativement supérieure soit émise lorsque le CAN (34) est commuté vers l'opération d'échantillonnage.

6. Dispositif selon la revendication 5, **caractérisé en ce que** l'amplificateur (33) est réalisé de sorte que sa largeur de bande électrique soit adaptée au spectre de fréquences des impulsions d'émission par la commande d'amplificateur (45).
